# EUROPEAN PATENT SPECIFICATION

(11) **EP 3 439 092 B1**
(45) Date of publication and mention of the grant of the patent: **22.07.2020**
(21) Application number: 17275121.6
(22) Date of filing: 04.08.2017
(51) Int. Cl.: H01M 8/18, H01M 8/20

(54) **ELECTRODE STRUCTURE FOR A REDOX FLOW BATTERY AS WELL AS REDOX FLOW BATTERY**
ELEKTRODENSTRUKTUR FÜR EINE REDOX-DURCHFLUSSBATTERIE SOWIE REDOX-DURCHFLUSSBATTERIE
STRUCTURE D'ÉLECTRODE POUR UNE BATTERIE À FLUX REDOX AINSI QU'UNE BATTERIE À FLUX REDOX

(43) Date of publication of application: 06.02.2019
(73) Proprietor: Siemens Aktiengesellschaft, 80333 München (DE); The University of Newcastle, Newcastle NE1 7RU (GB)
(72) Inventor: Friedl, Jochen, Newcastle Upon Tyne, NE3 3NJ (GB); Hughes, Timothy, Wantage, OX12 7AU (GB); Stimming, Ulrich, Newcastle upon Tyne, NE15 9JT (GB); Wolfschmidt, Holger, 91058 Erlangen (DE)

(56) References cited:
- WO-A2-2012/033692
- CN-U- 204 651 407
- US-A1- 2011 274 988
- US-A1- 2014 065 460
- US-A1- 2015 200 405

## Description

The invention relates to an electrode structure for a redox flow battery according to patent claim 1. The invention further relates to a redox flow battery according to patent claim 10.

Such an electrode structure for a redox flow battery and such a redox flow battery are already known form US 2013/0022846 A1. The electrode structure comprises at least one electrode which is, for example, configured to provide electric current or electrical energy by means of which at least one electrically operable device can be operated.

Moreover, US 2010/018991 A1 shows a method of fabricating a material.

US 2011/0274988 A1 shows a redox flow battery with an electrode surface having raised structures or projections.

WO 2012/033692 A2 shows a redox flow battery with an electrode having conductive spacers.

It is an object of the present invention to provide an electrode structure for a redox flow battery, and a redox flow battery so that the electrode structure and the redox flow battery can be manufactured in a particularly cost-effective way, wherein in a particularly advantageous operation of the redox flow battery can be realized.

This object is solved by an electrode structure having the features of patent claim 1, as well as a redox flow battery having the features of patent claim 10. Advantageous embodiments with expedient developments of the invention indicated in the other patent claims.

A first aspect of the present invention relates to an electrode structure for a redox flow battery, the electrode structure comprising at least one electrode. For example, in a completely assembled state of the redox flow battery, the at least one electrode can provide electric current or electrical energy by means of which at least one electrically operable device can be operated. For example, the redox flow battery can be used to store electrical energy by means of which said device can be operated in a need-based manner. For example, the device is an electric machine which can be operated as an electric motor by means of the electric energy stored in the redox flow battery, and provided by means of said electrode.

In order to further develop the electrode structure in such a way that the electrode structure and thus the redox flow battery can be manufactured in a particularly cost-effective way, wherein a particularly advantageous operation of the electrode structure and thus the redox flow battery can be realized, according to the present invention, the electrode is configured as a surface element having flat surfaces on opposite sides of the electrode or the surface element respectively. In this regard the surfaces extend in respective parallel planes.

Since, according to the present invention, the electrode is configured as said surface element the electrode is configured as an at least substantially two-dimensional (2D) electrode or structure. In this regard, the surface element or the electrode has a first extension extending in a first direction, and a second extension extending in a second direction being perpendicular to the first direction. The first and second extensions are substantially greater than a third extension of the surface element (electrode), the third extension extending in a third direction being perpendicular to the first and second directions. Thus, the surface element itself is flat and configured as, for example, a disc or plate. Since, in the electrode structure according to the present invention, said surface element is used as said electrode, the cost of the electrode structure can be kept particularly low. Moreover, in order to realize a particularly advantageous operation of the electrode structure and thus the redox flow battery, a plurality of three-dimensional (3D) protrusions is applied on at least one of the flat or even surfaces of the surface element (electrode), wherein said protrusions protrude, from the at least one surface, at least in a direction being perpendicular to the respective planes in which said surfaces extend or are arranged.

The respective plane is spanned by said first and second directions, so that said direction being perpendicular to the respective plane is said third direction running perpendicularly to the first and second directions and thus the respective plane. The protrusions are also referred to as three-dimensional structures or 3D structures which help realize a particularly advantageous, in particular efficient, operation of the redox flow battery. For example, the at least one surface on which the three-dimensional structures are applied and the three-dimensional structures (protrusions) themselves form a total surface having a surface roughness which can be defined or adjusted by means of the protrusions in a need-based manner.

The idea behind the present invention is that, conventionally, redox flow battery systems normally use high-surface electrodes which are made from carbon fleece or carbon or graphite felt. Thus, said high surface electrodes are configured as carbon electrodes which are three-dimensionally formed and flattened and flown through by at least one electrolyte of the respective battery redox flow system. These high surface electrodes form high surface areas which are required by low reactive species in standard redox flow battery systems such as vanadium/vanadium.

The idea behind the invention is that high reactive species such as POMs (polyoxometalate redox flow batteries) as redox systems are able to work on more planar electrodes. Thus, said protrusions are used as three-dimensional structures on the at least substantially two-dimensional electrode for defining an advantageous surface roughness and high active areas. Thus, a particularly effective and efficient operation of the redox flow battery can be realized. Moreover, the costs of the redox flow battery can be kept particularly low. For example, by using said at least substantially two-dimensional surface element as said electrode of the electrode structure, flow resistance in a flow cell of the redox flow battery can be kept particularly low, which is particularly advantageous when using highly active redox species. Moreover the three-dimensional protrusions are used to achieve a defined surface roughness and active surface area. Moreover, said three-dimensional protrusions can be used for a mechanical stabilization of at least one cell of the redox flow battery so that, for example, said protrusions can have a double function.

According to the present invention the protrusions are configured as spacers by means of which the electrode (surface element) is kept at a distance from at least one further component of the electrode structure. In this regard, the protrusions have a double function since the protrusions are used for both defining an advantageous surface roughness and keeping the electrode at a distance from said further component so as to realize a particularly high mechanical stability without having to use separate further components such as separate spaces. Thus, the number of parts of the electrode structure and thus the redox flow battery can be kept particularly low so that the weight and the costs of the redox flow battery can be kept particularly low.

In the electrode structure according to the present invention, the electrode is a flat and cheap structure in a two-dimensional configuration equipped with three-dimensional add-ons formed by said protrusions. Thus, a scalable surface roughness of said total surface can be realized. For example, said surface roughness can be adjusted in a need-base manner by adjusting the protrusions, in particular with respect to their form and/or geometry and/or extension and/or number. Moreover, preferably, the protrusions can function as defined spacers thereby helping create a particularly high mechanical stability of the redox flow battery.

According to the present invention the further component is configured as an ion exchange membrane for the redox flow battery, wherein the ion exchange membrane is also referred to as a membrane or a separator. Thus, by means of the protrusions, a particularly advantageous distance between the further component and the first electrode can be adjusted in a need-based manner.

In a particularly advantageous embodiment of the invention the further component is said membrane being arranged between the first electrode and said second electrode of the electrode structure. In this regard, preferably, the second electrode is configured as a second surface element having second flat or even surfaces on opposite sides of the second electrode. Embodiments and advantages of the first electrode and thus the first surface element are to be regarded as embodiments and advantages of the second electrode and thus the second surface element and vice versa.

The second surfaces extend in respective parallel second planes, wherein a plurality of three-dimensional second protrusions is applied on at least one of the second surfaces. The second protrusions protrude from the at least one second surface at least in a direction being perpendicular to the respective second planes. Preferably, said direction being perpendicular to the second planes is said third direction. Advantages and embodiments of the first protrusions are to be regarded as embodiments and advantages of the second protrusions and vice versa. Thus, the electrodes can be kept at respective distances from the further component in a particularly advantageous way without having to use separate components such as separate spacers so that the number of parts and thus the costs and the weight of the redox flow battery can be kept low. Moreover, for example, the protrusions can be used as guiding elements which can help guide respective electrolytes flowing along the membrane on opposite sides and around the respective protrusions in a particularly advantageous way so that a particularly effective and efficient operation of the redox flow battery can be realized.

According to the present invention, the first protrusions contact the further component directly so that a particularly efficient operation of the redox flow battery can be realized in a particularly cost-effective way.

Moreover, preferably the second protrusions contact the further component directly so that a particularly advantageous operation of a redox flow battery can be realized.

In order to keep the cost of the redox flow battery particularly low, in a further embodiment of the present invention, the protrusions and the electrode are made from the same material. This means, for example, the first protrusions and the first electrode are made from the same material. Alternatively or additionally, for example, the second protrusions and the second electrode are made from the same material.

According to the present invention the protrusions are made from an electrically non-conductive material so that, for example, additional separate isolators can be avoided.

For example, by using the protrusions as spacers a cell stack of the redox flow battery can be realized in a particularly cost-effective way, said cell stack comprising a plurality of battery cells which are also referred to as redox flow cells. Particularly, the battery cells can be realized as symmetrical redox flow cells in a particularly advantageous way by using said protrusions as spacers.

In a further embodiment of the invention the respective protrusion comprises a base body made from a first material, the base body being, at least partially, coated with a second material which is different from the first material. Thus, the electrode structure, in particular its characteristics, can be defended in a need-based manner and in a cost-effective way. For example, the electrode is made from the first material so that the respective base body and the respective electrode are made from the same material.

In a further advantageous embodiment of the invention, the second material is an electrically non-conductive material so as to, by means of the electrically non-conductive material, electrically isolate the respective protrusion at least partially, in particular in a major portion or completely. For example, said metallic material is at least one of nickel (Ni), copper (Cu), gold (Au) and at least one metal alloy. For example, the surface element can be made from at least one of carbon, nickel, copper and at least one further material.

In a further advantageous embodiment of the invention, the protrusions are arranged in a flow channel for guiding an electrolyte of the redox flow battery. Thus, for example, the protrusions can help realize a particularly advantageous flow of said electrolyte so that a particularly efficient and effective operation of the redox flow battery can be realized.

For example, the respective protrusion can be configured as a hemisphere. Moreover, the respective protrusion can act as a flow body which is directed in a flow direction of the electrolyte and/or rotated or inclined in relation to the flow direction. Alternatively or additionally, the respective protrusion can be configured as a semi-tube, a tube or a rod. For example, the protrusion has a longitudinal extension which is parallel or inclined or perpendicular to a flow direction of the electrolyte. Moreover, the respective protrusion can be hollow or configured as a hollow structure which is, for example, a semi-tube, a tube or a rod. Moreover, the respective protrusion can have a form of a permit. The respective protrusion can be made from carbon, a metallic material, a hybrid material and/or coated material. Moreover, the protrusions can be configured as flow bodies which have wave structures. Moreover, the protrusions can have a scalable structure. Furthermore, the respective protrusion can have a head which is electrically isolated and/or mechanically smoothed and/or coated, in particular with a separator.

A second aspect of the invention relates to a redox flow battery comprising at least one electrode structure, in particular, at least one electrode structure according to the present invention. The electrode structure comprises at least one electrode.

In order to further develop the redox flow battery in such a way that the redox flow battery can be manufactured in a particularly cost-effective way, and that a particularly effective and efficient operation of the redox flow battery can be realized, according to the present invention, the electrode is configured as a surface element and thus an at least substantially two-dimensional structure having flat or even surfaces on opposite sides of the electrode, said surfaces extending respective parallel planes. Moreover, a plurality of three-dimensional protrusions is applied on at least one of the surfaces, and protrude from the at least one surface at least in a direction being perpendicular to the respective planes. Advantages and advantageous embodiments of the first aspect of the present invention are to be regarded as advantages and advantageous embodiments of the invention and vice versa.

Further advantages, features, and details of the invention derive from the following description of preferred embodiments as well as from the drawings. The features and feature combinations previously mentioned in the description as well as the features and feature combinations mentioned in the following description of the figures and/or shown in the figures alone can be employed not only in the respective indicated combination but also in any other combination are taking alone without leaving the scope of the invention.

The drawings show in:
- FIG.1: a schematic view of a first embodiment of a redox flow battery according to the present invention;
- FIG.2: a schematic view of a method for manufacturing an electrode structure for the redox-flow battery according to the first embodiment;
- FIG.3: part of a schematic sectional view of the electrode structure according to the first embodiment;
- FIG.4: a schematic perspective view of an electrode of the electrode structure according to a second embodiment;
- FIG.5: a schematic perspective view of the electrode according to a third embodiment;
- FIG.6: a schematic perspective view of the electrode according to a fourth embodiment;
- FIG.7: part of a schematic sectional view of the electrode structure according to a fifth embodiment; and
- FIG.8: a schematic view of the redox flow battery according to a sixth embodiment.

In the figures the same elements or elements having the same functions are indicated by the same reference signs.

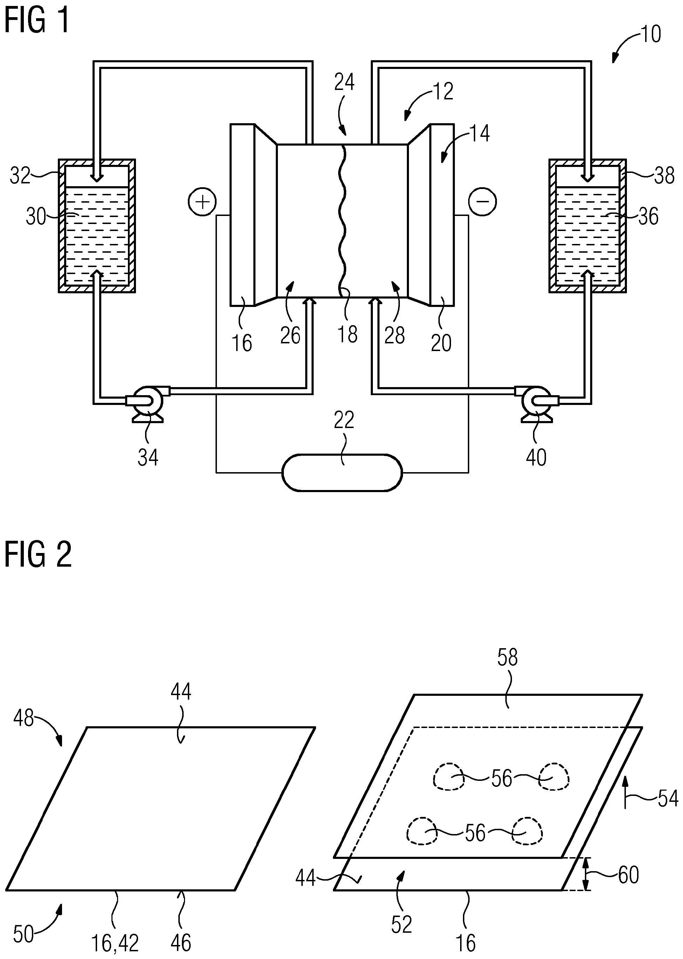

FIG. 1 shows in a schematic view a first embodiment of a redox flow battery 10 for storing electric current or electrical energy. In the first embodiment the redox flow battery 10 comprises at least one battery cell 12 which is also referred to as a cell, flow cell or redox flow cell. The redox flow battery 10, in particular said cell, comprises at least one electrode structure 14 having a first electrode 16 and at least two further components. A first one of said further components is an ion exchange membrane 18 which is also referred to as a membrane or separator. The second further component is a second electrode 20. As can be seen from FIG. 1, for example, the electrode 16 forms a positive pole, wherein the electrode 20 forms a negative pole of the cell. For example, the redox battery 10 can provide electrical energy or electric current by means of the electrodes 16 and 20, said electric current or electrical energy being stored in said cell. For example, at least one component 22 being, for example, a load can be electrically connected with the electrodes 16 and 20 so that the component 22 can be supplied with the electrical energy stored in the cell. For example, the cell has a chamber 24 which is divided into two chamber areas 26 and 28 by means of said membrane. The chamber area 26 is supplied with a first electrolyte 30 stored in a first electrolyte tank 32. For example, the first electrolyte 30 is conveyed from the electrolyte tank 32 into and through the chamber area 26 by means of a first pump 34.

Furthermore, the chamber area 28 can be supplied with a second electrolyte 36 stored in a second electrolyte tank 38. For example, the second electrolyte 46 can be conveyed from the electrolyte tank 38 into and through the chamber area 28 by means of a second pump 40. Having flown through the respective chamber area 26 or 28 the respective electrolyte 30 or 36 can flow from the respective chamber area 26 or 28 back into the respective electrolyte tank 32 or 38. When flowing through the respective chamber area 26 or 28, the respective electrolyte 30 or 36 flows against and along the respective electrode 16 or 20. In this regard, for example, the chamber area 26 is at least partially bounded by the electrode 16 wherein the chamber area 28 is at least partially bounded by the electrode 20 so that the electrolyte 30 can contact the electrode 16 directly, and the electrolyte 36 can contact the electrode 20 directly when flowing through the chamber area 26 or 28 respectively. Thus, as can be seen from FIG.1, the electrolytes 30 and 36 circulate in two separate circuits between which an ion exchange occurs in the cell via said separator. During the ion exchange first substances solved in the electrolyte 30 and/or 36 are reduced and second substances solved in the electrolyte 30 and/or 36 are oxidized whereby electrical energy is set free. Said electrical energy can be provided by the redox flow battery 10 via the electrodes 16 and 20.

As can be seen from FIG. 2, for example, the electrode 16 is configured as a surface element 42 being an at least substantially two-dimensional structure. The surface element 42 has flat or even surfaces 44 and 46 on opposite sides 48 and 50 of the electrode 16 or the surface element 42. The surfaces 44 and 46 are arranged or extended in respective virtual parallel planes. Moreover, a plurality of three-dimensional protrusions 52 is applied on, for example, the surface 44. The protrusions 52 are three-dimensional structures or form such a three-dimensional structure protruding, from the surface 44, at least in a direction being perpendicular to the respective planes. Said direction is illustrated by an arrow 54 in FIG. 2. The previous and following statements relating to the electrode 16 can be applied to the electrode 20 and vice versa. As can be seen from FIG. 2, in the first embodiment the protrusions 52 are configured as spacers 56 by means of which the electrode 16 is kept at a distance from at least one further component 58 of the electrode structure 14. In FIG.2, said distance or a direction along which said distance extends is illustrated by an arrow 60, wherein the direction along which said distance extends is the distance in which the protrusions 52 protrude from the surface 44.

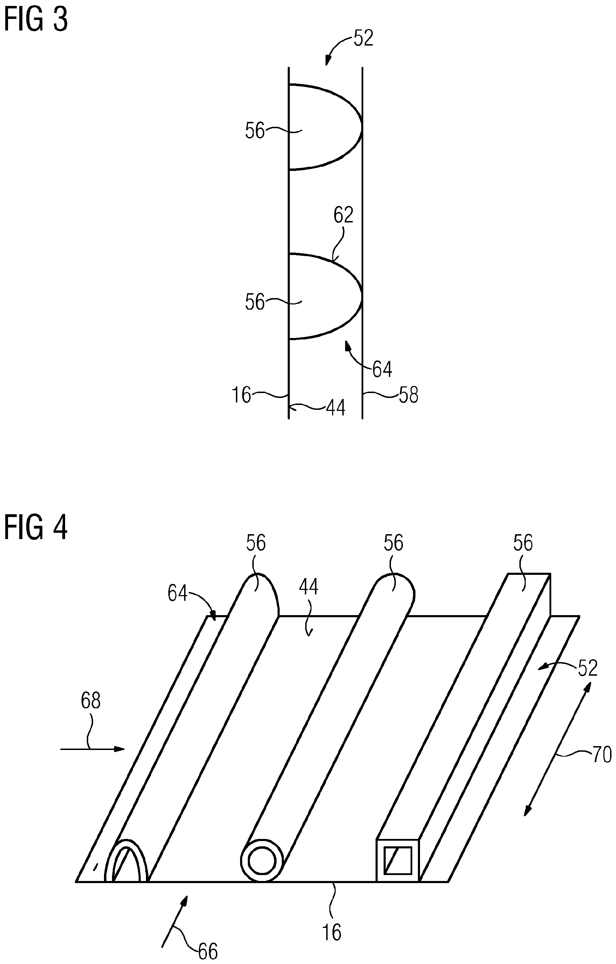

For example, the further component 58 is the membrane 18 or a third electrode of the electrode structure 14. As can be seen from FIG. 3, for example, the respective protrusion 52 has a curved or round outer circumferential surface 62 which, for example, contacts the further component 58 directly so that the respective protrusion 52 contacts the further component 58 directly.

FIG. 4 shows a second embodiment of the electrode 16 and thus the redox flow battery 10. Since, for example, the further component 58 is said separator, the protrusions 52 are arranged in a flow channel 64 through which the electrolyte 30 or 36 can flow. Thus, for example, the flow channel 64 is the chamber area 26 or 28. In FIG.4, respective arrows 66 and 68 illustrate respective flow directions in or along which the respective electrolyte 30 or 36 can flow through the flow channel 64. Moreover, in the second embodiment, the respective protrusion 52 has a longitudinal direction. In this regard, for example, the respective protrusion 52 is configured as a tube having a round or circular cross-section. Moreover, the protrusion 52 can be configured as a semi-tube having a half-round or half-circular cross section. Moreover, the protrusion 52 can be configured as a rod having a rectangular cross-section. The longitudinal extension of the respective protrusion 52 is illustrated by an arrow 70.

If, for example, the flow direction of the electrolyte corresponds to the arrow 66, the longitudinal extension of the protrusion 52 is parallel or corresponds to the flow direction. Further, if the flow direction of the electrolyte 30 or 36 corresponds to the arrows 68, the longitudinal extension of the respective protrusion 52 is angular, in particular perpendicular, to the flow direction. Moreover, the respective protrusion 52 can be massive or hollow.

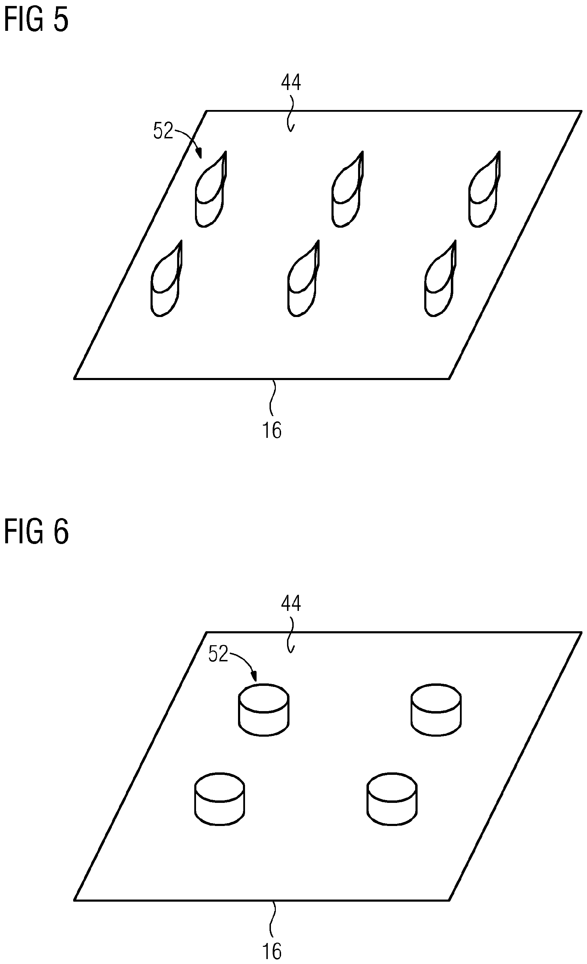

FIG.5 shows a third embodiment in which, for example, the respective protrusions 52 are configured as or have the forms of drops.

FIG. 6 shows a fourth embodiment in which the protrusions 52 are configured as or have the forms of cylinders.

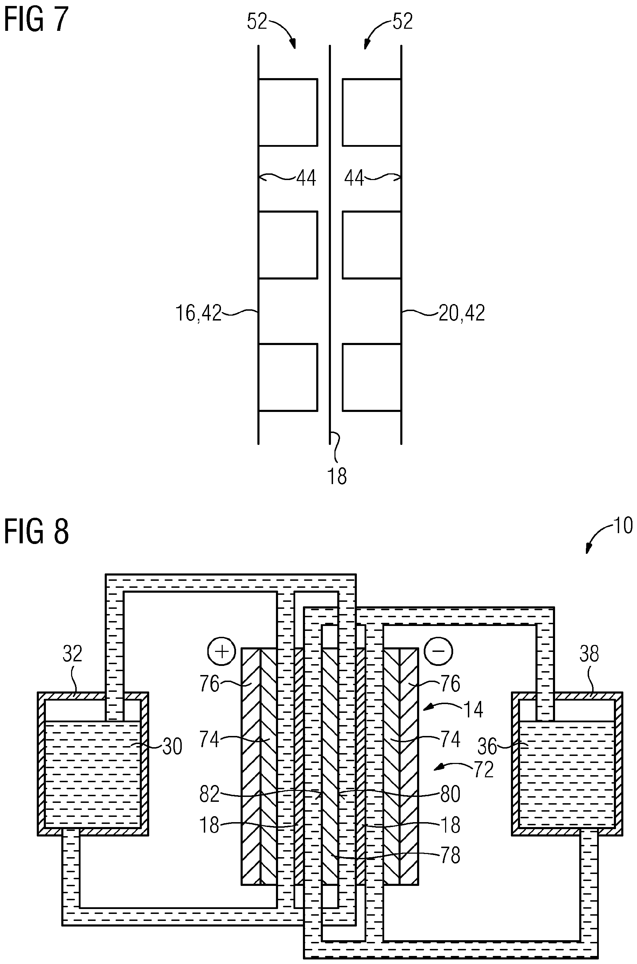

FIG. 7 shows a fifth embodiment in which both electrodes 16 and 20 are configured as surface elements 42 having surfaces 44 facing towards each other, wherein respective protrusions 52 are applied on the respective surfaces 44. Thus, the electrodes 16 and 20 are kept at respective distances from the separator by means of the protrusions 52.

Furthermore, FIG.8 shows a sixth embodiment in which the redox flow battery 10 comprises a cell stack 72 having a plurality of battery cells. This means, the cell stack 72 comprises at least two battery cells. The cell stack 72 comprises a plurality of ion exchange membranes 18, a plurality of end electrodes 74 and a plurality of current collectors 76. For example, the respective electrode 74 can be configured as the electrode 16 or 20. Moreover, the cell stack 72 comprises at least one bipolar electrode 78 having a first surface 80 and an opposite surface 82. In this regard, the electrolyte 30 can flow along the surface 80, wherein the electrolyte 36 can flow along the surface 82. For example, the respective surface 80 or 82 can be configured as said surface 44.

For example, the bipolar electrode 78 is configured in such a way that the bipolar electrode 78 comprises a first electrode element and a second electrode element. For example, the first electrode element and/or the second electrode element can be configured as the electrode 16 or 20. Moreover, the bipolar electrode 78 can comprise a separator arranged between the first and second electrode elements. For example, a respective surface such as the surface 44 of the respective electrode element can be equipped with protrusions 52 so that said electrode elements are kept at a distance from each other and/or from the separator arranged in between by said protrusions 52 applied on the respective surface 44 of the respective electrode element. Thus, for example, the protrusions 52 can be used as spacers between the electrode 16 or 20 and the separator or between two electrodes or the electrode elements. Thus, for example, said plurality of batteries cells can be realized as symmetrical redox flow cells in a particular cost-effective way. In other words, the first electrode element can be configured as the electrode 16 or 20 wherein the further component 58 can be said second electrode element which can also be configured as the electrode 16 or 20.

## Claims

1. An electrode structure (14) for a redox flow battery (10), the electrode structure (14) comprising at least one electrode (16),
**characterized in that**
the electrode (16) is configured as a surface element (42) having flat surfaces (44, 46) on opposite sides (48, 50) of the electrode (16), the surfaces (44, 46) extending in respective parallel planes, wherein a plurality of three-dimensional protrusions (52) is applied on at least one of the surfaces (44, 46) and protrude, from the at least one surface (44), at least in a direction (54) being perpendicular to the respective planes, the protrusions (52) are configured as spacers (56) by means of which the electrode (16) is kept at a distance (60) from at least one further component (58) of the electrode structure (14), **characterized in that** the protrusions (52) contact the further component (58) directly, whereas the further component (58) is configured as ion exchange membrane (18) for the redox flow battery (10) and the protrusions (52) are made from an electrically non-conductive material.

2. The electrode structure (14) according to claim 1,
**characterized in that**
the further component (58) is an ion exchange membrane (18) for the redox flow battery (10), the ion exchange membrane (18) being arranged between the electrode (16) and a second electrode (20) of the electrode structure (14).

3. The electrode structure (14) according to claim 2,
**characterized in that**
the second electrode (20) is configured as a second surface element (42) having second flat surfaces (44, 46) on opposite sides (48, 50) of the second electrode (20), the second surfaces (44, 46) extending in respective parallel second planes, wherein a plurality of three-dimensional second protrusions (52) is applied on at least one of the second surfaces (44, 46) and protrude, from the at least one second surface (44), at least in a direction (54) being perpendicular to the respective second planes.

4. The electrode structure (14) according to claim 3,
**characterized in that**
the second protrusions (52) contact the further component (58) directly.

5. The electrode structure (14) according to any one of the preceding claims,
**characterized in that**
the protrusions (52) and the electrode (16) are made from the same material.

6. The electrode structure (14) according to any one of the preceding claims,
**characterized in that**
the respective protrusion (52) comprises a bases body made from a first material, the base body being, at least partially, coated with a second material different from the first material.

7. The electrode structure (14) according to claim 6,
**characterized in that**
the electrode (16) is made from the first material.

8. The electrode structure (14) according to claim 6 or 7,
**characterized in that**
the second material is an electrically non-conductive material so as to electrically isolate the respective protrusion (52) at least partially.

9. The electrode structure (14) according to any one of the preceding claims,
**characterized in that**
the protrusions (52) are arranged in a flow channel (64) for guiding an electrolyte (30) of the redox flow battery (10).

10. A redox flow battery (10) comprising at least one electrode structure (14) according to claim 1 which comprises at least one electrode (16),
**characterized in that**
the electrode (16) is configured as a surface element (42) having flat surfaces (44, 46) on opposite sides (48, 50) of the electrode (16), the surfaces (44, 46) extending in respective parallel planes, wherein a plurality of three-dimensional protrusions (52) is applied on at least one of the surfaces (44, 46) and protrude, from the at least one surface (44), at least in a direction (54) being perpendicular to the respective planes, the protrusions (52) are configured as spacers (56) by means of which the electrode (16) is kept at a distance (60) from at least one further component (58) of the electrode structure (14), **characterized in that** the protrusions (52) contact a further component (58) directly, whereas the further component (58) is configured as ion exchange membrane (18) for the redox flow battery (10) and the protrusions (52) are made from an electrically non-conductive material.

## Patentansprüche

1. Elektrodenstruktur (14) für eine Redox-Durchflussbatterie (10), wobei die Elektrodenstruktur (14) mindestens eine Elektrode (16) umfasst,
**dadurch gekennzeichnet, dass**
die Elektrode (16) als ein Oberflächenelement (42) konfiguriert ist, das flache Oberflächen (44, 46) auf gegenüberliegenden Seiten (48, 50) der Elektrode (16) aufweist, sich die Oberflächen (44, 46) in entsprechenden parallelen Ebenen erstrecken, wobei eine Vielzahl von dreidimensionalen abstehenden Teilen (52) an mindestens einer der Oberflächen (44, 46) angebracht sind und von der mindestens einen Oberfläche (44) mindestens in einer Richtung (54) abstehen, die senkrecht zu den entsprechenden Ebenen ist, wobei die abstehenden Teile (52) als Abstandhalter (56) konfiguriert sind, mit deren Hilfe die Elektrode (16) in einem Abstand (60) von mindestens einer weiteren Komponente (58) der Elektrodenstruktur (14) gehalten wird, **dadurch gekennzeichnet, dass** die abstehenden Teile (52) mit der weiteren Komponente (58) in einem direkten Kontakt stehen, wohingegen die weitere Komponente (58) als eine Ionenaustauschermembran (18) für die Redox-Durchflussbatterie (10) konfiguriert ist und wobei die abstehenden Teile (52) aus einem elektrisch nicht-leitfähigen Material gefertigt sind.

2. Elektrodenstruktur (14) nach Anspruch 1,
**dadurch gekennzeichnet, dass**
die weitere Komponente (58) eine Ionenaustauschermembran (18) für die Redox-Durchflussbatterie (10) ist, wobei die Ionenaustauschermembran (18) zwischen der Elektrode (16) und einer zweiten Elektrode (20) der Elektrodenstruktur (14) angeordnet ist.

3. Elektrodenstruktur (14) nach Anspruch 2,
**dadurch gekennzeichnet, dass**
die zweite Elektrode (20) als ein zweites Oberflächenelement (42) konfiguriert ist, das zweite flache Oberflächen (44, 46) auf gegenüberliegenden Seiten (48, 50) der zweiten Elektrode (20) aufweist, wobei sich die zweiten Oberflächen (44, 46) in entsprechenden parallelen zweiten Ebenen erstrecken, wobei eine Vielzahl von dreidimensionalen zweiten abstehenden Teilen (52) an mindestens einer der zweiten Oberflächen (44, 46) angebracht sind und von der mindestens einen zweiten Oberfläche (44) mindestens in einer Richtung (54) abstehen, die senkrecht zu den entsprechenden zweiten Ebenen ist.

4. Elektrodenstruktur (14) nach Anspruch 3,
**dadurch gekennzeichnet, dass**
die zweiten abstehenden Teile (52) mit der weiteren Komponente (58) in einem direkten Kontakt stehen.

5. Elektrodenstruktur (14) nach einem der vorhergehenden Ansprüche,
**dadurch gekennzeichnet, dass**
die abstehenden Teile (52) und die Elektrode (16) aus dem gleichen Material gefertigt sind.

6. Elektrodenstruktur (14) nach einem der vorhergehenden Ansprüche,
**dadurch gekennzeichnet, dass**
der jeweilige abstehende Teil (52) einen Basiskörper umfasst, der aus einem ersten Material gefertigt ist,
wobei der Basiskörper mindestens teilweise mit einem zweiten Material beschichtet ist, das verschieden von dem ersten Material ist.

7. Elektrodenstruktur (14) nach Anspruch 6,
**dadurch gekennzeichnet, dass**
die Elektrode (16) aus dem ersten Material gefertigt ist.

8. Elektrodenstruktur (14) nach Anspruch 6 oder 7,
**dadurch gekennzeichnet, dass**
das zweite Material ein elektrisch nicht-leitfähiges Material ist, um den entsprechenden abstehenden Teil (52) mindestens teilweise elektrisch zu isolieren.

9. Elektrodenstruktur (14) nach einem der vorhergehenden Ansprüche,
**dadurch gekennzeichnet, dass**
die abstehenden Teile (52) in einem Durchflusskanal (64) angeordnet sind, um ein Elektrolyt (30) der Redox-Durchflussbatterie (10) zu leiten.

10. Redox-Durchflussbatterie (10), die mindestens eine Elektrodenstruktur (14) nach Anspruch 1 umfasst, die mindestens eine Elektrode (16) umfasst,
**dadurch gekennzeichnet, dass**
die Elektrode (16) als ein Oberflächenelement (42) konfiguriert ist, das flache Oberflächen (44, 46) auf gegenüberliegenden Seiten (48, 50) der Elektrode (16) aufweist, wobei sich die Oberflächen (44, 46) in entsprechenden parallelen Ebenen erstrecken, wobei eine Vielzahl von dreidimensionalen abstehenden Teilen (52) an mindestens einer der Oberflächen (44, 46) angebracht sind und von der mindestens einen Oberfläche (44) mindestens in einer Richtung (54) abstehen, die senkrecht zu den entsprechenden Ebenen ist, wobei die abstehenden Teile (52) als Abstandhalter (56) konfiguriert sind, mit deren Hilfe die Elektrode (16) in einem Abstand (60) von mindestens einer weiteren Komponente (58) der Elektrodenstruktur (14) gehalten wird, **dadurch gekennzeichnet, dass** die abstehenden Teile (52) mit einer weiteren Komponente (58) in einem direkten Kontakt stehen, wohingegen die weitere Komponente (58) als eine Ionenaustauschermembran (18) für die Redox-Durchflussbatterie (10) konfiguriert ist und wobei die abstehenden Teile (52) aus einem elektrisch nicht-leitfähigen Material gefertigt sind.

## Revendications

1. Structure (14) d'électrode pour une batterie (10) à flux redox, la structure (14) d'électrode comprenant au moins une électrode (16),
**caractérisée en ce que**
l'électrode (16) est configurée sous la forme d'un élément (42) de surface ayant des surfaces (44, 46) planes sur des côtés (48, 50) opposés de l'électrode (16), les surfaces (44, 46) s'étendant dans des plans parallèles respectifs, une pluralité de protubérances (52) à trois dimensions étant appliquée à au moins l'une des surfaces (44, 46) et faisant saillie de la au moins une surface (44), au moins dans une direction (54) perpendiculaire aux plans respectifs, les protubérances (52) étant configurées en intercalaires (56), au moyen desquelles l'électrode (16) est maintenue à une distance (60) d'au moins un autre composant (58) de la structure (14) d'électrode, **caractérisée en ce que** les protubérances (52) contactent l'autre composant (58) directement, tandis que l'autre composant (58) est configuré sous la forme d'une membrane (18) d'échange d'ion pour la batterie (10) à flux redox et les protubérances (52) sont en un matériau non-conducteur de l'électricité.

2. Structure (14) d'électrode suivant la revendication 1,
**caractérisée en ce que**
l'autre composant (58) est une membrane (18) d'échange d'ion pour la batterie (10) à flux redox, la membrane (18) d'échange d'ion étant disposée entre l'électrode (16) et une deuxième électrode (20) de la structure (14) d'électrode.

3. Structure (14) d'électrode suivant la revendication 2,
**caractérisée en ce que**
la deuxième électrode (20) est configurée sous la forme d'un deuxième élément (42) de surface ayant des deuxièmes surfaces (44, 46) planes sur des côtés (48, 50) opposés de la deuxième électrode (20), les deuxièmes surfaces (44, 46) s'étendant dans des deuxièmes plans respectivement parallèles, une pluralité de deuxièmes protubérances (52) à trois dimensions étant appliquée à au moins l'une des deuxièmes surfaces (44, 46) et faisant saillie de la au moins une deuxième surface (44), au moins dans une direction (54) perpendiculaire aux deuxièmes plans respectifs.

4. Structure (14) d'électrode suivant la revendication 3,
**caractérisée en ce que**
les deuxièmes protubérances (52) contactent l'autre composant (58) directement.

5. Structure (14) d'électrode suivant l'une quelconque des revendications précédentes,
**caractérisée en ce que**
les protubérances (52) et l'électrode (16) sont en le même matériau.

6. Structure (14) d'électrode suivant l'une quelconque des revendications précédentes,
**caractérisée en ce que**
la protubérance (52) respective comprend un corps de base en un premier matériau, le corps de base étant revêtu, au moins en partie, d'un deuxième matériau différent du premier matériau.

7. Structure (14) d'électrode suivant la revendication 6,
**caractérisée en ce que**
l'électrode (16) est en le premier matériau.

8. Structure (14) d'électrode suivant l'une quelconque des revendications précédentes,
**caractérisée en ce que**
le deuxième matériau est un matériau non-conducteur de l'électricité, de manière à isoler électriquement la protubérance (52) respective, au moins en partie.

9. Structure (14) d'électrode suivant l'une quelconque des revendications précédentes,
**caractérisée en ce que**
les protubérances (52) sont disposées dans un conduit (64) d'écoulement pour conduire un électrolyte (30) de la batterie (10) à flux redox.

10. Batterie (10) à flux redox, comprenant au moins une structure (14) d'électrode suivant la revendication 1, qui comprend au moins une électrode (16),
**caractérisée en ce que**
l'électrode (16) est configurée sous la forme d'un élément (42) de surface ayant des surfaces (44, 46) planes sur des côtés (48, 50) opposés de l'électrode (16), les surfaces (44, 46) s'étendant dans des plans parallèles respectifs, une pluralité de protubérances (52) à trois dimensions étant appliquée à au moins l'une des surfaces (44, 46) et faisant saillie de la au moins une surface (44), au moins dans une direction (54) perpendiculaire aux plans respectifs, les protubérances (52) étant configurées en intercalaires (56), au moyen desquelles l'électrode (16) est maintenue à une distance (60) d'au moins un autre composant (58) de la structure (14) d'électrode, **caractérisée en ce que** les protubérances (52) contactent un autre composant (58) directement, tandis que l'autre composant (58) est configuré sous la forme d'une membrane (18) d'échange d'ion pour la batterie (10) à flux redox et les protubérances (52) sont en un matériau non-conducteur de l'électricité.
